# EUROPÄISCHE PATENTSCHRIFT

(11) **EP 3 590 668 B1**
(45) Veröffentlichungstag und Bekanntmachung des Hinweises auf die Patenterteilung: **31.08.2022**
(21) Anmeldenummer: 18181257.9
(22) Anmeldetag: 02.07.2018
(51) Int. Cl.: B25J 19/06, G01S 17/02, G01S 13/86

(54) **VERFAHREN ZUR ÜBERWACHUNG EINES ÜBERWACHUNGSBEREICHES AUF VERLETZUNG**
METHOD FOR MONITORING A SURVEILLANCE AREA FOR INJURY
PROCÉDÉ DE SURVEILLANCE D'UNE ZONE DE SURVEILLANCE AU NIVEAU D'INFRACTION

(43) Veröffentlichungstag der Anmeldung: 08.01.2020
(73) Patentinhaber: SICK AG, 79183 Waldkirch (DE)
(72) Erfinder: Jachmann, Fabian, 79102 Freiburg (DE)
(74) Vertreter: Manitz Finsterwald Patent- und Rechtsanwaltspartnerschaft mbB

(56) Entgegenhaltungen:
- DE-A1- 4 407 757
- DE-A1-102007 031 157
- DE-B3-102010 007 520

## Beschreibung

Die Erfindung betrifft ein Verfahren zur Überwachung eines Überwachungsbereiches auf Verletzung des Überwachungsbereiches und ein entsprechendes System.

In verschiedenen technologischen Umfeldern ist es notwendig, einen Überwachungsbereich bzw. ein Schutzfeld auf dessen Verletzung zu überwachen. So kann es zum Beispiel notwendig sein, einen Gefahrenbereich einer Maschine, zum Beispiel einer Werkzeugmaschine, daraufhin zu überwachen, ob sich in dem Gefahrenbereich eine Person oder ein Körperteil einer Bedienperson befindet. In diesem Fall muss die Steuerung der Maschine Sicherheitsmaßnahmen, insbesondere gegebenenfalls eine Abschaltung der Maschine, einleiten. Auch zum Beispiel bei der Steuerung von fahrerlosen Transportsystemen ist es notwendig, einen Überwachungsbereich in Fahrtrichtung zu überwachen, um Kollisionen zu vermeiden.

Zum Einsatz kommen zum Beispiel Laserscanner, die den zu überwachenden Bereich abscannen und es auf diese Weise ermöglichen, dass eine entsprechende Steuer- und Auswerteeinheit bei Verletzung des Überwachungsbereiches durch ein Objekt Sicherheitsmaßnahmen einleitet.

Andere Anwendungen verwenden Kamerasysteme, zum Beispiel Stereokamerasysteme oder Kameras, die nach dem Lichtlaufzeitprinzip (Time-of-Flight (TOF)-Prinzip) arbeiten. Ebenso ist die Verwendung von Radarsensoren möglich. Insbesondere, wenn es sich bei dem zu detektierenden Objekt um eine Person oder ein Körperteil handeln kann, ist es sehr wichtig, dass eine sichere Detektion möglich ist ("sicher" im Sinne von "safe"), zum Beispiel gemäß entsprechender Normen für die Personensicherheit. Eine hohe Sensitivität ist also notwendig, so dass die Detektionsschwelle ausreichend niedrig gesetzt werden muss, damit eine gefahrbringende Verletzung des Überwachungsbereichs auf jeden Fall zur Einleitung entsprechender Sicherheitsmaßnahmen führt. Um auf jeden Fall die Sicherheit zu gewährleisten, wird eher in Kauf genommen, dass eine Fehlabschaltung aufgrund eines Fehlalarms geschieht, als dass eine sicherheitsgefährdende Verletzung des Überwachungsbereichs übersehen wird. Je nach Einsatzszenario kann dies zu einer hohen Fehlalarmrate führen, das heißt zu einer reduzierten Verfügbarkeit der angesteuerten Maschine.

Bei sicheren Laserscannern besteht zum Beispiel das Problem, dass Staubteilchen in der Luft bzw. Aerosole bereits so viel Licht remittieren können, dass das Echo über der Detektionsschwelle des Scanners liegt und so zu einem Alarm führt, der jedoch gar nicht auf die Verletzung des Überwachungsbereichs zurückzuführen ist. Bei Radarsensoren können zum Beispiel kleine Metallobjekte zu einem starken Echo führen, wenn ihre Oberfläche senkrecht zur Ausbreitungsrichtung steht. Auch dies führt zu unerwünschten Fehlalarmen.

Bei Kamerasensoren ist es notwendig, auch bei nicht gut zu identifizierenden Objekten eine Sicherheitsmaßnahme einzuleiten, um der ausreichenden Sicherheit genüge zu tun. Auch dies kann zu unerwünschten Fehlalarmen führen.

Eine Erhöhung der Sicherheit kann erreicht werden, wenn redundante Systeme mit zwei oder mehr Sensoren zum Einsatz kommen. Werden die Signalausgänge dieser Sensoren mit einer "ODER"-Verknüpfung verbunden, so schlägt diese Sensorkombination an und löst eine Sicherheitsmaßnahme aus, wenn einer der Sensoren im Überwachungsbereich ein Objekt wahrzunehmen meint. Aufgrund der Redundanz der Systeme erhöht sich damit zwar die Sicherheit, die Verfügbarkeit des Systems nimmt aber ab, weil bei einem Fehlalarm nur eines der Sensoren bereits eine Sicherheitsmaßnahme erfolgt.

Um die Verfügbarkeit zu erhöhen, kann auch eine "UND"-Verknüpfung der Sensorausgangssignale erfolgen. Nur wenn beide Sensoren eine Verletzung des Überwachungsbereiches anzeigen, wird dann eine Sicherheitsmaßnahme ausgelöst. Ein solches System ist zwar robuster, aber dafür weniger sicher.

DE 10 2007 031 157 A1 beschreibt einen optoelektronischen Sensor mit zwei Bildsensoren, deren Bilder zu einem Stereoskopiebild zusammengesetzt werden. In einem Testzyklus wird aus den Bilddaten jeweils ein Triangulationsbild oder ein Lichtlaufzeitbild erzeugt und daraus resultierende Objektabstände werden miteinander verglichen. Bei Gleichheit der ermittelten Objektabstände wird ein Abschaltsignal erzeugt.

DE 44 07 757 A1 beschreibt eine Vorrichtung zur Erfassung von Hindernissen mit einer Radarkopfeinheit und einer CCD-Kamera. Für die CCD-Kamera ist ein Detektionsgenauigkeitsbeurteilungsschritt 52 beschrieben, der immer vor der Beurteilung des Gefahrenpotentials eines Fahrweges durchgeführt wird.

DE 10 2010 007 520 B3 beschreibt eine Sicherheitssteuerung, die Sensordaten angeschlossener Sensoren mit unterschiedlichen Detektionseigenschaften zu einem gemeinsamen Objektfeststellungssignal verrechnet.

Aufgabe der Erfindung ist es, ein Verfahren bzw. ein System anzugeben, mit dem eine sichere Überwachung eines Überwachungsbereichs auf Verletzung durchgeführt werden kann und dennoch eine gute Verfügbarkeit vorliegt.

Diese Aufgabe wird mit einem Verfahren mit den Merkmalen des Anspruchs 1 bzw. ein System mit den Merkmalen des Anspruchs 12 gelöst.

Vorteilhafte Ausgestaltungen und Ausführungsformen ergeben sich aus den Unteransprüchen, der vorliegenden Beschreibung und den Figuren.

Die Erfindung basiert auf einem Verfahren und einem System, die auf Sensordatenfusion basieren.

Bei einem erfindungsgemäßen Verfahren wird der Überwachungsbereich mit einem ersten Sensor auf seine Verletzung durch ein Objekt hin überwacht, wobei der erste Sensor ein erstes Detektionsverfahren zum Einsatz bringt. Mit dem Begriff "Objekt" sind für den vorliegenden Text sowohl Gegenstände, als auch Personen oder Körperteile zu verstehen.

Wenn dieser erste Sensor ein Signal ausgibt, das eine Verletzung des Überwachungsbereichs anzeigt, kommt ein zweiter Sensor zum Einsatz. Dieser zweite Sensor ist so angeordnet oder ausgestaltet, dass zumindest ein Teil des durch den ersten Sensor überwachten Überwachungsbereichs mit ihm überwacht werden kann.

Die Detektionsfähigkeit des zweiten Sensors wird aktuell geprüft und zwar zumindest für denjenigen Teil des Überwachungsbereichs, in dem von dem ersten Sensor eine Verletzung des Überwachungsbereichs angezeigt wird. Wenn die aktuell feststellbare Detektionsfähigkeit des zweiten Sensors als ausreichend klassifiziert wird, wird geprüft, ob der zweite Sensor ein Signal erzeugt, das eine Verletzung desjenigen Teils des Überwachungsbereichs anzeigt, in dem bereits der erste Sensor eine Verletzung angezeigt hat.

Der Begriff des "Anzeigens" einer Verletzung ist hier nicht so zu verstehen, dass dies grundsätzlich durch eine Anzeige nach Art eines Displays geschieht, sondern auch zum Beispiel dahingehend, dass ein Ausgangssignal erzeugt wird, das zur Weiterverarbeitung dient (insbesondere zum Beispiel zur Einleitung einer Sicherheitsmaßnahme wie dem Abschalten einer Maschine).

Die Anzeige einer Verletzung des Überwachungsbereichs bedeutet nicht notwendigerweise, dass eine solche Verletzung tatsächlich stattfindet. Für den vorliegenden Text ist damit nur gemeint, dass das Signal des jeweiligen Sensors einem Verletzungssignal entspricht.

Eine tatsächliche Verletzung des Überwachungsbereichs wird nur dann angenommen (im Sinne von "festgestellt"), wenn sowohl der erste als auch der zweite Sensor jeweils ein Signal erzeugen, das eine Verletzung anzeigt und wenn gleichzeitig die Detektionsfähigkeit des zweiten Sensors als ausreichend klassifiziert wurde. Dann wird gegebenenfalls eine notwendige Sicherheitsmaßnahme ausgelöst.

Wird also eine Verletzung des Überwachungsbereichs durch den ersten Sensor registriert, so kann anhand der Daten des zweiten Sensors geprüft werden, ob es sich um eine sicherheitskritische Verletzung des Überwachungsbereichs oder um einen Fehlalarm handelt. Im Gegensatz zur oben erwähnten "UND"-Verknüpfung, wird zunächst geprüft, ob der zweite Sensor detektionsfähig ist. Eine dauerhafte Überwachung des Überwachungsbereichs durch beide Sensoren gleichzeitig ist nicht notwendig, da der zweite Sensor nur dann zum Einsatz kommt, wenn der erste Sensor ein entsprechendes Verletzungssignal erzeugt. Um sich auf den zweiten Sensor verlassen zu können, muss im Falle seines Einsatzes seine aktuelle Detektionsfähigkeit insbesondere in demjenigen Bereich des Überwachungsbereichs sichergestellt werden, in dem der erste Sensor ein Verletzungssignal festgestellt hat.

Mit dem erfindungsgemäßen Verfahren bzw. dem erfindungsgemäßen System kann also die Verfügbarkeit eines Sicherheitssensors zur Personendetektion mit ausreichender Sicherheit deutlich gesteigert werden. Durch den Schritt der Prüfung der Detektionsfähigkeit des zweiten Sensors ist es außerdem möglich, hierfür einen kostengünstiger bzw. einfacher ausgestalteten Sensor einzusetzen, da seine ausreichende Detektionsfähigkeit zuvor geprüft wird. Das Vorsehen zweier redundanter, ausreichend sicherer Sensoren ist nicht notwendig, ohne dass die Sicherheit leidet. Preisgünstigere Sensorkomponenten können also zumindest für den zweiten Sensor zum Einsatz kommen.

Die Verwendung des Begriffs "Schritt" für die einzelnen erfindungsgemäßen Verfahrensmerkmale sollen nicht so verstanden werden, dass diese Schritte in der genannten Reihenfolge exklusiv ausgeführt werden. So ist zum Beispiel ebenfalls denkbar, dass der zweite Sensor grundsätzlich eingeschaltet ist, sein Signal aber nicht durchgängig zusammen mit dem Signal des ersten Sensors verwendet oder ausgewertet wird.

Eine besonders vorteilhafte und einfache Ausgestaltung sieht vor, dass bei Klassifizierung der Detektionsfähigkeit des zweiten Sensors als "nicht ausreichend", wenn der erste Sensor eine Verletzung des Überwachungsbereichs anzeigt, grundsätzlich eine Verletzung des Überwachungsbereichs angenommen wird. Dies ist aus Sicherheitsgründen vorteilhaft, weil dann auch zum Beispiel bei einem Defekt des zweiten Sensors auf jeden Fall "auf der sicheren Seite" gehandelt wird.

Eine besonders vorteilhafte Ausführungsform sieht vor, dass der erste Sensor ein "sicherer" Sensor im Sinne von "safe" ist, der zur Überwachung von Überwachungsbereichen auf eintretende Personen bzw. Körperteilen vorgesehen und/oder zugelassen ist (zum Beispiel gemäß einer entsprechenden einschlägigen Norm). Der zweite Sensor kann eine niedrigere Sicherheitsstufe aufweisen, weil er vor seiner Verwendung bzw. Auswertung auf seine Detektionsfähigkeit hin geprüft wird.

In Erweiterung des erfindungsgemäßen Verfahrens können auch mehr als zwei Sensoren zum Einsatz kommen.

Vorteilhafterweise wird ein Sensor als zweiter Sensor eingesetzt, der ein anderes Detektionsverfahren verwendet, als der erste Sensor.

Eine mögliche günstige Ausgestaltung sieht vor, dass der erste Sensor einen Laserscanner oder einen Radarsensor, zum Beispiel einen FMCW-(frequenzmo-duliertes Dauerstrichradar)-Radarsensor umfasst, der ein sicheres Detektionsvermögen aufweist.

Als zweiter Sensor kann eine Kamera oder eine Stereokamera zum Einsatz kommen, insbesondere eine dreidimensionale Kamera (zum Beispiel nach dem Time-of-Flight-Prinzip (TOF-Prinzip) oder eine Stereokamera).

Eine solche Kamera muss beim Einsatz als zweitem Sensor grundsätzlich keinem so hohen Sicherheitsstandard genügen wie der erste Sensor. D.h. die Detektionsfähigkeit muss nicht grundsätzlich unter allen Bedingungen ausreichend hoch sein. Allerdings muss es möglich sein situationsbedingt eine hinreichend sichere Detektionsfähigkeit des zweiten Sensors aus deren selber generierten Messdaten abzuleiten. Die Prüfung der Detektionsfähigkeit eines solchen Systems kann zum Beispiel durch Kontrastauswertung in einem bestimmten Bildbereich des kamerabasierten zweiten Sensors erfolgen. Wird zum Beispiel eine Stereokamera verwendet, so lässt sich anhand der Bilddaten beurteilen, ob zum Beispiel ausreichend Struktur bzw. Kanten erkennbar sind, um eine Objekterkennung zu ermöglichen. Eine Kontrastauswertung kann zum Beispiel auch erfolgen indem geprüft wird, ob der feststellbare Kontrast oder die Anzahl der Kontrastsprünge über einem vorbestimmten Schwellenwert liegt.

Auch der Signalpegel, das heißt die Helligkeit, der entsprechenden Bereiche kann ein Kriterium darstellen, aufgrund dessen die ausreichende Detektionsfähigkeit der Kamera beurteilt wird.

Zum Beispiel bei Verwendung eines sicheren Radarsensors als erstem Sensor mit einer nicht-sicheren TOF-Kamera als zweitem Sensor kann sichergestellt werden, dass ein Radarsensorsignal (das zum Beispiel auf kleine Metallobjekte zurückzuführen ist, die sich in Bodennähe befinden) von einer Person stammt oder ob es sich um ein Artefakt handelt.

Als zweiter Sensor kann aber zum Beispiel auch eine projizierte Laserlinie mithilfe einer Kamera beobachtet werden. Auch hier kann die Prüfung der Detektionsfähigkeit ähnlich erfolgen, wie oben beispielhaft für Kamerasysteme beschrieben.

Es ist jedoch auch denkbar, dass als erster Sensor eine sichere Time-of-Flight-(TOF-)Kamera zum Einsatz kommt, die zum Beispiel mit einem Laserscanner als zweitem Sensor verwendet wird (der dann nicht notwendigerweise die hohen Anforderungen an einen sicheren Sensor aufweisen muss). So kann zum Beispiel bei der TOF-Kamera, die auf einem ,Photomischdetektor' basiert, durch stark reflektierende Objekte außerhalb des Eindeutigkeitsbereichs, die plötzlich im Schutzfeld erscheinen, eine Fehlabschaltung drohen. Die Daten des Laserscanners können dann zur Verifikation genutzt werden. Erkennt der Laserscanner im korrespondierenden Raumwinkel ein weit entferntes Objekt mit hoher Remission, kann das Ergebnis der Sicherheits-TOF-Kamera auf diese Weise falsifiziert werden. Hat der Laserscanner seine Detektionsfähigkeit durch die Erfassung des weit entfernten Objekts bewiesen, kann davon ausgegangen werden kann, dass das von der TOF-Kamera als erstem Sensor angezeigte Signal ein Fehlalarm ist.

Grundsätzlich ist es zum Beispiel auch denkbar, dass die Prüfung der Detektionsfähigkeit des zweiten Sensors es umfasst, dass festgestellt wird, ob der mit dem zweiten Sensor gemessene Signalpegel einen vorgegebenen Schwellenwert überschreitet.

Die Erfindung betrifft außerdem ein System zur Überwachung eines Überwachungsbereichs mit den Merkmalen des Anspruchs 12. Das System umfasst einen ersten und einen zweiten Sensor, die unterschiedliche Detektionsverfahren einsetzen. Eine mit den beiden Sensoren verbundene Steuer- und Auswerteeinheit ist vorgesehen, die die Durchführung des erfindungsgemäßen Verfahrens ermöglicht. Dabei ist der Begriff "Einheit" nicht so zu verstehen, dass hier grundsätzlich eine körperliche Einheit zwischen den einzelnen Komponenten der Steuer- und Auswerteeinheit vorliegen muss.

Besondere Ausgestaltungen des erfindungsgemäßen Systems ergeben sich aus den besonderen Ausgestaltungen des erfindungsgemäßen Verfahrens in analoger Weise. Die Vorteile des erfindungsgemäßen Systems bzw. seiner vorteilhaften Ausführungsformen ergeben sich ebenfalls aus den Schilderungen zu den entsprechenden erfindungsgemäßen Verfahrensmerkmalen.

Die Erfindung wird nachfolgend beispielhaft mit Bezug auf die Zeichnungen beschrieben. Es zeigen:
- Fig. 1: eine schematische Draufsicht auf einen Überwachungsbereich mit einem erfindungsgemäßen Überwachungssystem zur Durchführung eines erfindungsgemäßen Verfahrens und
- Fig. 2: den Ablauf einer Ausgestaltung des erfindungsgemäßen Verfahrens.

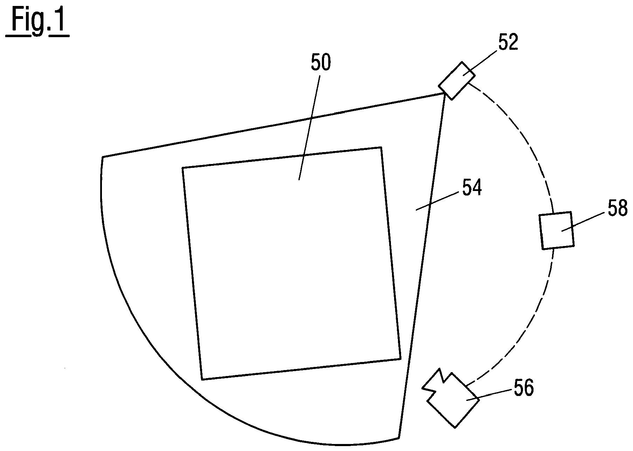

Fig. 1 zeigt die Draufsicht auf einen Überwachungsbereich 50. Es wird angenommen, dass eine Verletzung dieses Überwachungsbereichs 50 eine Gefahr darstellt. Es kann sich dabei zum Beispiel um den Bereich vor einer Werkzeugmaschine handeln, zum Beispiel einer Gesenkbiegepresse. Eintreten einer Person in diesen Überwachungsbereich birgt die Gefahr, dass eine Verletzung durch die sich im Betrieb befindende Maschine geschieht. Wird also eine Verletzung dieses Überwachungsbereichs 50 festgestellt, so muss im beschriebenen Beispiel eine Abschaltung der Maschine erfolgen. Dazu wird der Überwachungsbereich 50 im vorliegenden Beispiel mit einem Laserscanner 52 überwacht. In bekannter Weise wird hier einen Laserstrahl fächerförmig in dem Feld 54 hin- und herbewegt. Eine Reflexion des Laserstrahls zurück in den Laserscanner 52 deutet auf eine Verletzung des überwachten Bereichs hin.

Ein zweiter Sensor 56 ist vorgesehen, der denselben Überwachungsbereich 50 überwachen kann. Beim beschriebenen Beispiel handelt es sich um eine Kamera, zum Beispiel eine Stereokamera.

Beide Sensoren, also der Laserscanner 52 und die Kamera 56 sind mit einer Steuer- und Auswerteeinheit verbunden. Diese empfängt die Signale der Sensoren 52 und 54, wertet sie aus und leitet gegebenenfalls entsprechende Sicherheitsmaßnahmen an der gefahrbringenden Maschine ein.

Stellt der Laserscanner 52 eine Verletzung des Schutzbereichs 50 fest, so muss überprüft werden, ob es sich tatsächlich um eine gefahrbringende Verletzung handelt.

Dazu wird die Detektionsfähigkeit der Kamera 56 geprüft. Dies kann zum Beispiel dadurch erfolgen, dass zumindest in dem Bereich, in dem der Laserscanner 52 ein Objekt anzeigt, ausgewertet wird, ob die Stereokamera 56 Signale empfängt, die auf eine Struktur oder Kanten hindeuten. Wenn solche Strukturen erkannt werden können, kann von der hinreichenden Detektionsfähigkeit der Kamera ausgegangen werden. Stellt die Kamera dann an derselben Stelle ein Objekt fest, wo es der Laserscanner 52 angezeigt hat, wird eine Sicherheitsabschaltung der Maschine veranlasst. Wird von der Kamera eine Struktur, wie z.B. der Boden erkannt, aber nicht als Objekt im Schutzbereich klassifiziert, lässt sich davon ausgehen, dass es sich um einen Fehlalarm des Laserscanners, z.B. aufgrund von Staubpartikeln in der Luft gehandelt hat.

Selbstverständlich kann alternativ oder zusätzlich auch der Signalpegel der Kamera 56 oder die festgestellte Helligkeit in dem Bereich ausgewertet werden, in dem der Laserscanner 52 ein Objekt anzeigt. Nur wenn ein ausreichender Signalpegel vorliegt, kann von der ausreichenden Detektionsfähigkeit der Kamera 56 ausgegangen werden.

Eine solche Signalpegelauswertung stellt auch sicher, dass bei einem Defekt der Kamera 56 nicht von einer ausreichenden Detektionsfähigkeit ausgegangen wird, weil das Bild dunkel ist.

Wird also bei der Prüfung der Detektionsfähigkeit der Kamera 56 die mangelnde Detektionsfähigkeit zumindest in dem Bereich festgestellt, in dem der Laserscanner 52 ein Objekt anzeigt, so wird grundsätzlich zur Sicherheit davon ausgegangen, dass es sich um eine Gefahrensituation handelt, und im beschriebenen Beispiel eine Abschaltung der Maschine veranlasst.

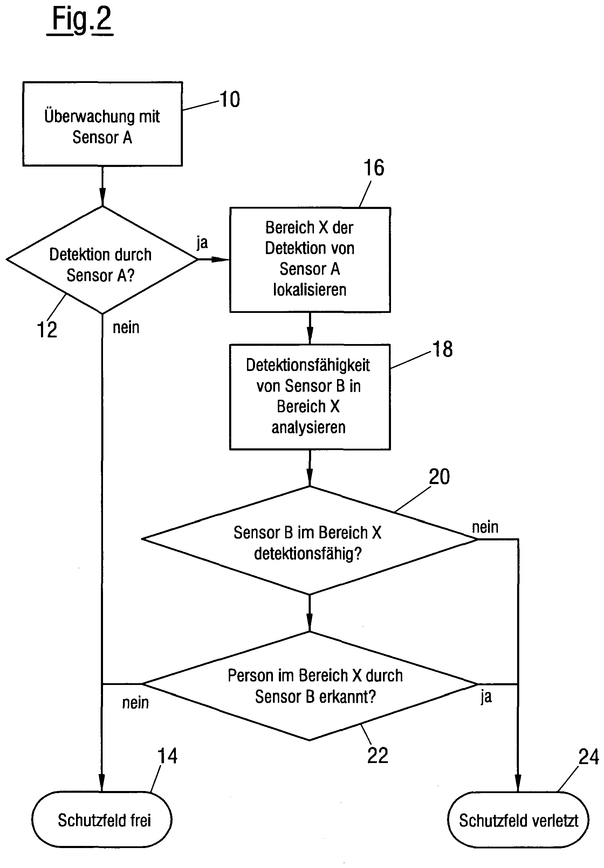

Fig. 2 zeigt noch einmal allgemein den Ablauf eines erfindungsgemäßen Verfahrens in Form eines Flussdiagrammes.

Dabei wird der erste Sensor als Sensor A bezeichnet und der zweite Sensor als Sensor B. Sensor A überwacht in Schritt 10 den Überwachungsbereich 50 (Hier als Schutzfeld bezeichnet). Solange bei gegebenenfalls periodischen Abfragen 12 oder bei kontinuierlicher Überwachung keine Detektion durch den Sensor A stattfindet, wird gemäß dem Element 14 von einem freien Schutzfeld ausgegangen. Wird jedoch auf die Abfrage 12 durch den Sensor A eine Detektion angezeigt, so wird im Schritt 16 ein Bereich X des Schutzfeldes festgelegt, in dem die Detektion stattgefunden hat. In Schritt 18 wird dann die Detektionsfähigkeit des zweiten Sensors B in diesem Bereich X analysiert.

Stellt sich heraus, dass keine ausreichende Detektionsfähigkeit durch den zweiten Sensor besteht (Abfrage 20), so wird zur Sicherheit gemäß 24 eine Schutzfeldverletzung angenommen.

Liegt in dem Bereich X jedoch eine ausreichende Detektionsfähigkeit des zweiten Sensors B vor, so wird das Sensorsignal des zweiten Sensors ausgelesen. Lässt sich daraus auf eine Person im Bereich X des Schutzfeldes schließen, so wird auch hier gemäß 24 eine Schutzfeldverletzung angenommen. Ergibt das Signal des zweiten Sensors B jedoch ein negatives Signal, so wird gemäß Schritt 14 von einem freien Schutzfeld ausgegangen, nachdem der zweite Sensor B das Signal des ersten Sensors A falsifiziert hat.

Bei Annahme einer Verletzung einer Schutzfeldverletzung (24) wird dann eine entsprechende Sicherheitsmaßnahme eingeleitet.

## Patentansprüche

1. Verfahren zur Überwachung eines Überwachungsbereiches (50) auf Verletzung des Überwachungsbereiches (50) mit folgenden Schritten:
a) Überwachung des Überwachungsbereiches (50) auf seine Verletzung durch ein Objekt mit einem ersten Sensor (52), der ein erstes Detektionsverfahren verwendet,
b) Prüfen der aktuellen Detektionsfähigkeit eines zweiten Sensors (56), wenn der erste Sensor (52) ein Signal erzeugt, das eine Verletzung des Überwachungsbereiches (50) anzeigt, wobei der zweite Sensor (56) derart angeordnet und ausgestaltet ist, zumindest einen Teil des durch den ersten Sensor (52) überwachten Überwachungsbereiches (50) zu überwachen, wobei der Schritt zur Prüfung der Detektionsfähigkeit des zweiten Sensors (56) umfasst, die Detektionsfähigkeit des zweiten Sensors (56) zumindest für den Teil des Überwachungsbereiches (50) zu prüfen, in dem von dem ersten Sensor (52) eine Verletzung des Überwachungsbereiches (50) angezeigt wird,
c) Prüfen, ob der zweite Sensor (56) ein Signal erzeugt, dass eine Verletzung zumindest desjenigen Teiles des Überwachungsbereiches (50) anzeigt, in dem der erste Sensor (52) eine Verletzung anzeigt, wenn die Detektionsfähigkeit des zweiten Sensors (56) in dem Teil des Überwachungsbereiches (50) in Schritt b) als ausreichend klassifiziert wird, in dem der erste Sensor (52) einen Verletzung anzeigt, und
d) Annehmen einer Verletzung des Überwachungsbereiches (50) dann, wenn der erste und der zweite Sensor (52, 56) jeweils ein Signal erzeugen, das eine Verletzung anzeigt, und die Detektionsfähigkeit des zweiten Sensors (56) in dem Teil des Überwachungsbereiches (50) in Schritt b) als ausreichend klassifiziert wird, in dem der erste Sensor (52) eine Verletzung anzeigt.

2. Verfahren nach Anspruch 1, bei dem eine Verletzung des Überwachungsbereiches (50) angenommen wird, wenn der erste Sensor (52) ein Signal erzeugt, das eine Verletzung des Überwachungsbereiches (50) anzeigt, und die Prüfung der Detektionsfähigkeit des zweiten Sensors (56) in Schritt b) eine nicht-ausreichende Detektionsfähigkeit ergibt.

3. Verfahren nach einem der Ansprüche 1 oder 2, bei dem als erster Sensor ein Laserscanner (52) und als zweiter Sensor eine Kamera (56) eingesetzt werden.

4. Verfahren nach einem der Ansprüche 1 oder 2, bei dem als erster Sensor ein Radarsensor und als zweiter Sensor eine Kamera oder Stereokameraeingesetzt werden.

5. Verfahren nach einem der Ansprüche 3 oder 4. bei dem als Kamera ein 3D-Kamerasystem, insbesondere eine Time-of-Flight-Kamera oder eine Stereo-Kamera eingesetzt werden.

6. Verfahren nach Anspruch 3, bei dem mit der Kamera eine projizierte Laserlinie überwacht wird.

7. Verfahren nach einem der Ansprüche 3 bis 6, bei dem der Schritt der Prüfung der Detektionsfähigkeit des zweiten Sensors (56) eine Kontrastauswertung umfasst und die Detektionsfähigkeit als ausreichend klassifiziert wird, wenn ausreichend Strukturen oder Kanten erkennbar sind, um eine Objekterkennung zu ermöglichen.

8. Verfahren nach einem der Ansprüche 1 oder 2, bei dem als erster Sensor ein Laserscanner und als zweiter Sensor ein FMCW Radarsensor eingesetzt werden.

9. Verfahren nach einem der Ansprüche 1 oder 2, bei dem als erster Sensor eine Kamera, insbesondere eine Time-of-Flight-Kamera, und als zweiter Sensor ein Laserscanner eingesetzt werden.

10. Verfahren nach einem der Ansprüche 1 bis 9, bei dem der Schritt der Prüfung der Detektionsfähigkeit des zweiten Sensors (56) umfasst, festzustellen, ob der mit ihm gemessene Signalpegel einen vorgegebenen Schwellenwert überschreitet.

11. Verfahren nach einem der Ansprüche 1 bis 10, bei dem als erster Sensor (52) ein sicherer Sensor und zweiter Sensor (56) ein nicht-sicherer Sensor zum Einsatz kommen.

12. System zur Überwachung eines Überwachungsbereiches (50) auf Verletzung des Überwachungsbereiches (50) mit einem ersten und einem zweiten Sensor (52, 56), die unterschiedliche Detektionsverfahren einsetzen, und einer mit den Sensoren (52, 56) verbundenen Steuer- und Auswerteeinheit (58), die zumindest zur Durchführung der Schritte b) bis d) des Anspruches 1 eingerichtet ist.

13. System nach Anspruch 12, bei dem die Steuer- und Auswerteeinheit (58) zusätzlich zur Durchführung des Schrittes gemäß Anspruch 2 eingerichtet ist.

14. System nach einem der Ansprüche 12 oder 13, bei dem der erste Sensor (52) ein sicherer Sensor ist und der zweite Sensor (56) ein nicht-sicherer Sensor ist.

## Claims

1. A method of monitoring a monitored zone (50) for a violation of the monitored zone (50) comprising the following steps:
(a) monitoring the monitored zone (50) for its violation by an object using a first sensor (52) which uses a first detection method;
b) checking the current detection capability of a second sensor (56) when the first sensor (52) generates a signal which indicates a violation of the monitored zone (50), wherein the second sensor (56) is arranged and designed in such a manner to monitor at least a part of the monitored zone (50) monitored by the first sensor (52),
wherein the step of checking the detection capability of the second sensor (56) comprises checking the detection capability of the second sensor (56) at least for the part of the monitored zone (50) in which a violation of the monitored zone (50) is indicated by the first sensor (52);
c) checking whether the second sensor (56) generates a signal which indicates a violation of at least that part of the monitored zone (50) in which the first sensor (52) indicates a violation when the detection capability of the second sensor (56) is classified as sufficient in step b) in the part of the monitored zone (50) in which the first sensor (52) indicates a violation; and
d) assuming a violation of the monitored zone (50) when the first and the second sensor (52, 56) each generate a signal which indicates a violation and the detection capability of the second sensor (56) is classified as sufficient in step b) in the part of the monitored zone (50) in which the first sensor (52) indicates a violation.

2. A method in accordance with claim 1, in which a violation of the monitored zone (50) is assumed when the first sensor (52) generates a signal which indicates a violation of the monitored zone (50) and the check of the detection capability of the second sensor (56) in step b) reveals a non-sufficient detection capability.

3. A method in accordance with one of the claims 1 or 2, in which a laser scanner (52) is used as the first sensor and a camera (56) is used as the second sensor.

4. A method in accordance with one of the claims 1 or 2, in which a radar sensor is used as the first sensor and a camera or a stereo camera is used as the second sensor.

5. A method in accordance with one of the claims 3 or 4, in which a 3D camera system, in particular a time-of-flight camera or a stereo camera, is used as the camera.

6. A method in accordance with claim 3, in which a projected laser line is monitored by the camera.

7. A method in accordance with any one of the claims 3 to 6, in which the step of checking the detection capability of the second sensor (56) comprises a contrast evaluation and the detection capability is classified as sufficient if sufficient structures or edges can be recognized to enable an object recognition.

8. A method in accordance with one of the claims 1 or 2, in which a laser scanner is used as the first sensor and an FMCW radar sensor is used as the second sensor.

9. A method in accordance with one of the claims 1 or 2, in which a camera, in particular a time-of-flight camera, is used as the first sensor and a laser scanner is used as the second sensor.

10. A method in accordance with any one of the claims 1 to 9, wherein the step of checking the detection capability of the second sensor (56) comprises determining whether the signal level measured by said second sensor (56) exceeds a predefined threshold value.

11. A method in accordance with any one of the claims 1 to 10, in which a safe sensor is used as the first sensor (52) and a non-safe sensor is used as the second sensor (56).

12. A system for monitoring a monitored zone (50) for a violation of the monitored zone (50), said system comprising a first and a second sensor (52, 56), which use different detection methods, and a control and evaluation unit (58) which is connected to the sensors (52, 56) and which is configured at least to perform steps b) to d) of claim 1.

13. A system in accordance with claim 12, in which the control and evaluation unit (58) is additionally configured to perform the step in accordance with claim 2.

14. A system in accordance with one of the claims 12 or 13, in which the first sensor (52) is a safe sensor and the second sensor (56) is a non-safe sensor.

## Revendications

1. Procédé de surveillance d'une zone à surveiller (50) pour détecter une violation de la zone à surveiller (50), comprenant les étapes suivantes consistant à :
a) surveiller la zone à surveiller (50) quant à sa violation par un objet avec un premier capteur (52) qui utilise un premier procédé de détection,
b) vérifier la capacité de détection actuelle d'un deuxième capteur (56) si le premier capteur (52) génère un signal indiquant une violation de la zone à surveiller (50), le deuxième capteur (56) étant disposé et configuré de manière à surveiller au moins une partie de la zone à surveiller (50) surveillée par le premier capteur (52), l'étape de vérification de la capacité de détection du deuxième capteur (56) comprenant la vérification de la capacité de détection du deuxième capteur (56) au moins pour la partie de la zone à surveiller (50) dans laquelle une violation de la zone à surveiller (50) est indiquée par le premier capteur (52),
c) vérifier si le deuxième capteur (56) génère un signal indiquant une violation d'au moins la partie de la zone à surveiller (50) dans laquelle le premier capteur (52) indique une violation, si dans l'étape b), la capacité de détection du deuxième capteur (56) est classée comme suffisante dans la partie de la zone à surveiller (50) dans laquelle le premier capteur (52) indique une violation, et
d) supposer une violation de la zone à surveiller (50) si les premier et deuxième capteurs (52, 56) génèrent chacun un signal indiquant une violation et si dans l'étape b), la capacité de détection du deuxième capteur (56) est classée comme suffisante dans la partie de la zone à surveiller (50) dans laquelle le premier capteur (52) indique une violation.

2. Procédé selon la revendication 1,
dans lequel une violation de la zone à surveiller (50) est supposée si le premier capteur (52) génère un signal indiquant une violation de la zone à surveiller (50) et si dans l'étape b), la vérification de la capacité de détection du deuxième capteur (56) révèle une capacité de détection insuffisante.

3. Procédé selon l'une des revendications 1 ou 2,
dans lequel un scanneur laser (52) est utilisé comme premier capteur, et une caméra (56) est utilisée comme deuxième capteur.

4. Procédé selon l'une des revendications 1 ou 2,
dans lequel un capteur radar est utilisé comme premier capteur, et une caméra ou une caméra stéréoscopique est utilisée comme deuxième capteur.

5. Procédé selon l'une des revendications 3 ou 4,
dans lequel un système de caméra 3D, en particulier une caméra à temps de vol ou une caméra stéréoscopique, est utilisée comme caméra.

6. Procédé selon la revendication 3,
dans lequel une ligne laser projetée est surveillée avec la caméra.

7. Procédé selon l'une des revendications 3 à 6,
dans lequel l'étape de vérification de la capacité de détection du deuxième capteur (56) comprend une évaluation du contraste, et la capacité de détection est classée comme suffisante si suffisamment de structures ou de bords sont reconnaissables pour permettre une reconnaissance d'objet.

8. Procédé selon l'une des revendications 1 ou 2,
dans lequel un scanner laser est utilisé comme premier capteur, et un capteur radar FMCW est utilisé comme deuxième capteur.

9. Procédé selon l'une des revendications 1 ou 2,
dans lequel une caméra, en particulier une caméra à temps de vol, est utilisée comme premier capteur, et un scanner laser est utilisé comme deuxième capteur.

10. Procédé selon l'une des revendications 1 à 9,
dans lequel l'étape de vérification de la capacité de détection du deuxième capteur (56) consiste à déterminer si le niveau de signal mesuré par ce dernier dépasse un seuil prédéterminé.

11. Procédé selon l'une des revendications 1 à 10,
dans lequel un capteur sécurisé est utilisé comme premier capteur (52), et un capteur non sécurisé est utilisé comme deuxième capteur (56).

12. Système de surveillance d'une zone à surveiller (50) pour détecter une violation de la zone à surveiller (50), comprenant des premier et deuxième capteurs (52, 56) qui mettent en oeuvre des procédés de détection différents, et une unité de commande et d'évaluation (58) qui est connectée aux capteurs (52, 56) et qui est conçue au moins pour réaliser les étapes b) à d) de la revendication 1.

13. Système selon la revendication 12,
dans lequel l'unité de commande et d'évaluation (58) est conçue en supplément pour réaliser l'étape selon la revendication 2.

14. Système selon l'une des revendications 12 ou 13,
dans lequel le premier capteur (52) est un capteur sécurisé, et le deuxième capteur (56) est un capteur non sécurisé.
